# EUROPÄISCHE PATENTSCHRIFT

(11) **EP 0 874 962 B1**
(45) Veröffentlichungstag und Bekanntmachung des Hinweises auf die Patenterteilung: **03.05.2000**
(21) Anmeldenummer: 97906990.3
(22) Anmeldetag: 09.01.1997
(51) Int. Cl.: F16K 1/34

(54) **GEDÄMPFTES VENTIL**
DAMPED VALVE
SOUPAPE AMORTIE

(30) Priorität: 19.01.1996 DE 19601856
(43) Veröffentlichungstag der Anmeldung: 04.11.1998
(73) Patentinhaber: SIEMENS AKTIENGESELLSCHAFT, 80333 München (DE)
(72) Erfinder: CONRADS, Hermann-Josef, D-91074 Herzogenaurach (DE); LAURER, Erwin, D-91096 Möhrendorf (DE); MODEL, Jürgen, D-91056 Erlangen (DE); PREISS, Ullrich, D-91056 Erlangen (DE)
(86) Internationale Anmeldenummer: DE9700025
(87) Internationale Veröffentlichungsnummer: WO9726476

(56) Entgegenhaltungen:
- EP-A- 0 124 821

## Beschreibung

Die Erfindung betrifft ein Ventil mit einem Mittel zum Absperren eines Ventilinnenraums, wobei das Mittel zum Absperren mit einem in einem ersten Zylinder geführten Kolben stellbar ist, und wobei durch den Kolben im ersten Zylinder ein erster Raum und ein zweiter Raum gebildet ist.

Aus der EP 0 124 821 ist ein Absperrventil bekannt, das einen in einem Zylinder geführten Kolben aufweist. Der Kolben ist über eine in einem zweiten Zylinder geführte Kolbenstange mit einem konischen Absperrmittel verbunden. Ein durch den Kolbenboden und den Boden des ersten Zylinders gebildeter Raum steht über einen zwischen der Kolbenstange und der Wand des zweiten Zylinders gebildeten engen und angrenzenden weiten Drosselspalt mit einem ringförmigen Entlastungsraum in Verbindung. Von diesem führen Steuerbohrungen zu Steuerventilen.

Zum Schließen des Ventils werden die Steuerventile geöffnet. Druckmittel entweicht über die Drosselspalte durch die im Entlastungsraum vorgesehene Steuerbohrung. Dadurch bewegt der Kolben sich nach unten. Gleichzeitig verändert sich die Geometrie der Drosselspalte: Der Anteil des weiten Drosselspalts wird zugunsten des engen Drosselspalts verkleinert. Demzufolge wird die Dämpfung umso größer, je weiter der zweite Kolben in die Schließstellung des Ventils bewegt wird; das konische Absperrmittel wird somit entgegen einer zunehmenden Dämpfungskraft auf seinen Sitz bewegt. - Über die weitere Funktionsweise dieses Ventils ist in diesem Dokument nichts ausgesagt.

Ein Nachteil dieses Ventils besteht darin, daß es aufgrund seiner nichtlinearen Dämpfung nur als Absperrventil einsetzbar ist. Ferner ist das nach dem Stand der Technik bekannte Ventil nicht zum Abblasen von Mehrphasengemischen, wie sie im Primärkeis von Kernkraftwerken mit einem Druckwasserreaktor auftreten können, geeignet.

Aufgabe der Erfindung ist es, ein möglichst einfach aufgebautes gedämpftes Ventil anzugeben, welches universell einsetzbar ist.

Diese Aufgabe wird durch die Merkmale des Patentanspruchs 1 gelöst. Vorteilhafte Weiterbildungen ergeben sich aus den Merkmalen der Patentansprüche 2 bis 10.

Nach Maßgabe der Erfindung steht der zweite Raum mit dem Ventilinnenraum über eine Drosselstrecke in Verbindung, so daß das Mittel zum Absperren sowohl in Schließ- als auch in Öffnungsrichtung gedämpft bewegbar ist, und es ist eine Bohrung vorgesehen, die den Ventilinnenraum mit dem ersten Raum verbindet.

Mit dieser Anordnung kann auf einfache und kostengünstige Weise eine Ventilsteuerung zur Verfügung gestellt werden, die stets einem gleichmäßigen Druckmittelein- bzw. austrag in bzw. aus dem zweiten Raum gewährleistet. Somit ist jederzeit eine gleichmäßig gedämpfte Bewegung des Mittels zum Absperren sowohl in Öffnungs- als auch Schließrichtung möglich.

Bedingt durch die Bohrung beaufschlagt der Druck des Ventilinnenraumes unmittelbar den ersten Raum.

Gemäß einer vorteilhaften Ausgestaltung des erfindungsgemäßen Ventils ist die Drosselstrecke durch mindestens einen mit einem Drosseleinsatz versehenen Überströmkanal gebildet.

Darüber hinaus kann die Drosselstrecke durch mindestens einen Drosselspalt zwischen der Wand eines zweiten Zylinders einerseits und einem in ihm geführten, das Mittel zum Absperren und den Kolben verbindenden Dämpfungskolben andererseits gebildet sein.

Gemäß eines weiteren Ausgestaltungsmerkmals weist der Dämpfungskolben mindestens eine Nut zur Aufnahme eines Kolbenrings auf. Somit ist es möglich, das Dämpfungsverhalten anforderungsgemäß einzustellen

Vorteilhafterweise sind mindestens zwei Drosselspalte unterschiedlicher Druckmitteldurchlässigkeit vorgesehen. Dabei ist ein erster Drosselspalt bsp. zwischen der Wand des zweiten Zylinders und der Wand des Dämpfungszylinders, und ein zweiter Drosselspalt zwischen der Wand des zweiten Zylinders und mindestens einem am Dämpfungskolben aufgenommenen Kolbenring gebildet. Die Druckmitteldurchlässigkeit des ersten und des zweiten Drosselspalts kann einerseits durch deren Weite oder aber durch die Anzahl und/oder die Lässigkeit der verwendeten Kolbenringe beeinflußt werden.

Gemäß einem weiteren Ausgestaltungsmerkmal der Erfindung weist der Dämpfungskolben einen taillierten Abschnitt und der zweite Zylinder einen dazu korrespondieren Vorsprung auf. Der Vorsprung und der taillierte Abschnitt sind ebenso wie der bzw. die Drosselspalt/e vorzugsweise umlaufend ausgebildet.

Des weiteren kann eine Einrichtung zum Anzeigen des Hubes des ersten Kolbens vorgesehen sein.

Schließlich kann mindestens ein Absperrelement vorgesehen sein, mit dem ein in dem ersten Raum herrschender Druck entlastbar ist. Damit kann die Stellbewegung des Mittels zum Absperren gesteuert werden.

Nachfolgend wird ein Ausführungsbeispiel der Erfindung anhand der beigefügten Zeichnung näher erläutert.

Hierin zeigen
- Fig. 1: einen Vertikalschnitt eines ersten Ausführungsbeispiels der Erfindung.
- Fig. 2: einen vergrößerten Ausschnitt nach Fig.1,
- Fig. 3: einen Vertikalschnitt eines zweiten Ausführungsbeispiels der Erfindung,
- Fig. 4: einen Vertikalschnitt eines dritten Ausführungsbeispiels der Erfindung, wobei das Ventil geschlossen ist,
- Fig. 5: einen vergrößerten Ausschnitt nach Fig.4,
- Fig. 6: einen Vertikalschnitt nach Fig. 4, wobei das Ventil halb geöffnet ist,
- Fig. 7: einen vergrößerten Ausschnitt nach Fig. 6,
- Fig. 8: einen Vertikalschnitt nach Fig. 4, wobei das Ventil vollständig geöffnet ist,
- Fig. 9: einen vergrößerten Ausschnitt nach Fig. 8 und
- Fig. 10: einen Vertikalschnitt nach Fig. 4, wobei das Ventil halb geschlossen ist.

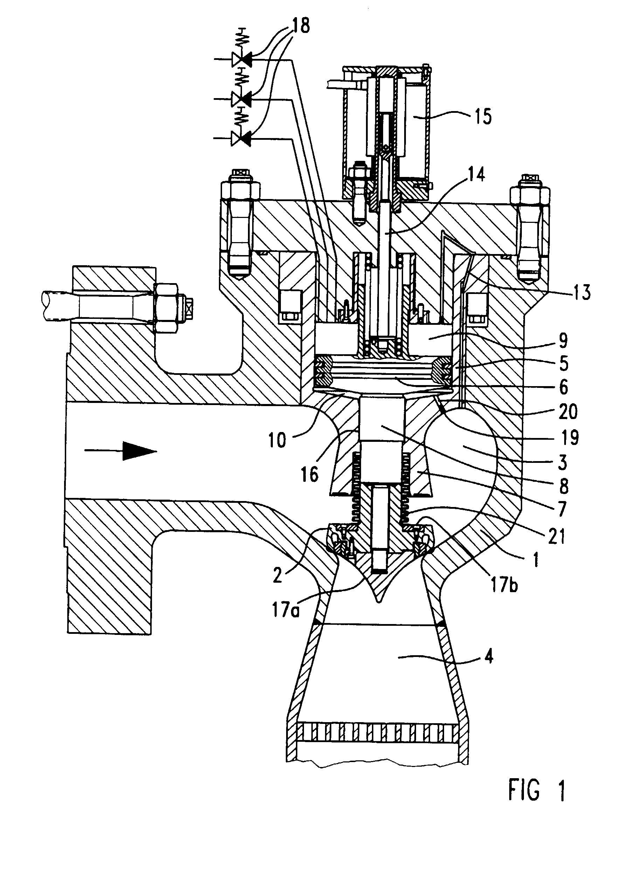

In Fig. 1 ist ein erstes Ausführungsbeispiel der Erfindung gezeigt. In einem Gehäuse 1 des Ventils ist ein druckbeaufschlagter Ventilinnenraum 3 durch einen Ventilkegel 2 von einem Ausblasestutzen 4 getrennt. Der Ventilkegel 2 ist mit einem in einem Stellzylinder 5 geführten Stellkolben 6 mittels eines in einem Dämpfungszylinder 7 geführten Dämpfungskolbens 8 verbunden. Durch den Stellkolben 6 ist im Stellzylinder 5 ein Steuerraum 9 und ein Dämpfungsraum 10 gebildet. Der Dämpfungsraum 10 steht über einen mit einem Drosseleinsatz 19 versehenen Überströmkanal 20 mit dem druckbeaufschlagten Ventilinnenraum 3 in Verbindung. Der untere Abschnitt des Dämpfungskolbens 8 ist mit einem Balg 21 versehen, der den Dämpfungskloben 8 gegenüber dem Ventilinnenraum 3 abdichtet. Eine Bohrung 13 verbindet den Ventilinnenraum 3 mit dem Steuerraum 9. Der Stellkolben 6 steht über eine Stange 14 mit einer induktiven Stellanzeige 15 in Verbindung. Die schematisch dargestellten Steuerventile 18 trennen den im Normalbetrieb druckbeaufschlagten Steuerraum 9 von einem Raum geringeren Drucks, bsp. der Umgebung.

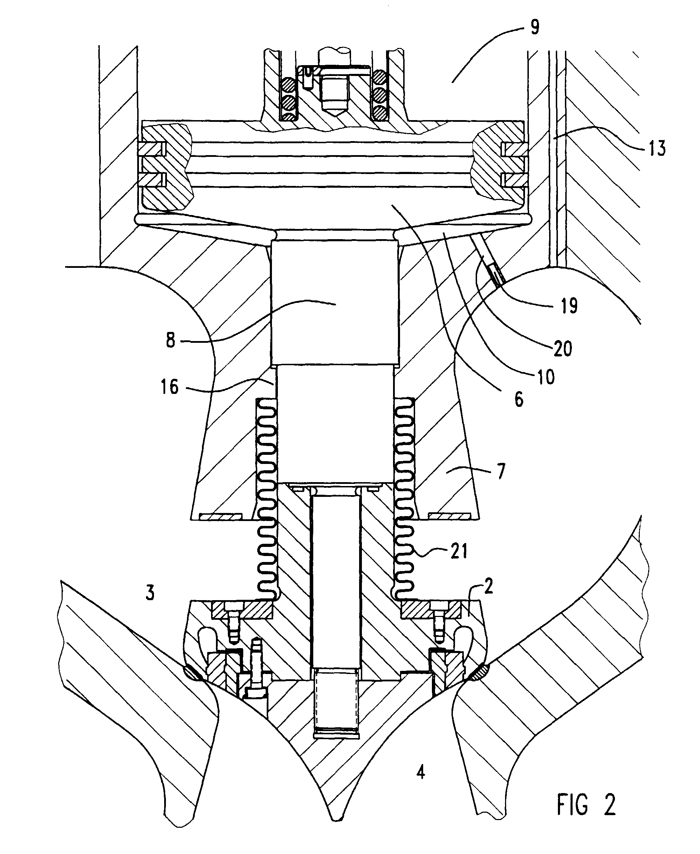

Fig. 2 zeigt in vergrößerter Darstellung nochmals das Ventil nach Fig. 1. Dieser Darstellung ist insbesondere zu entnehmen, daß der Dämpfungszylinder 7 einen nach innen vorspringenden Abschnitt 16 aufweist, der den Dämpfungskolben 8 führt.

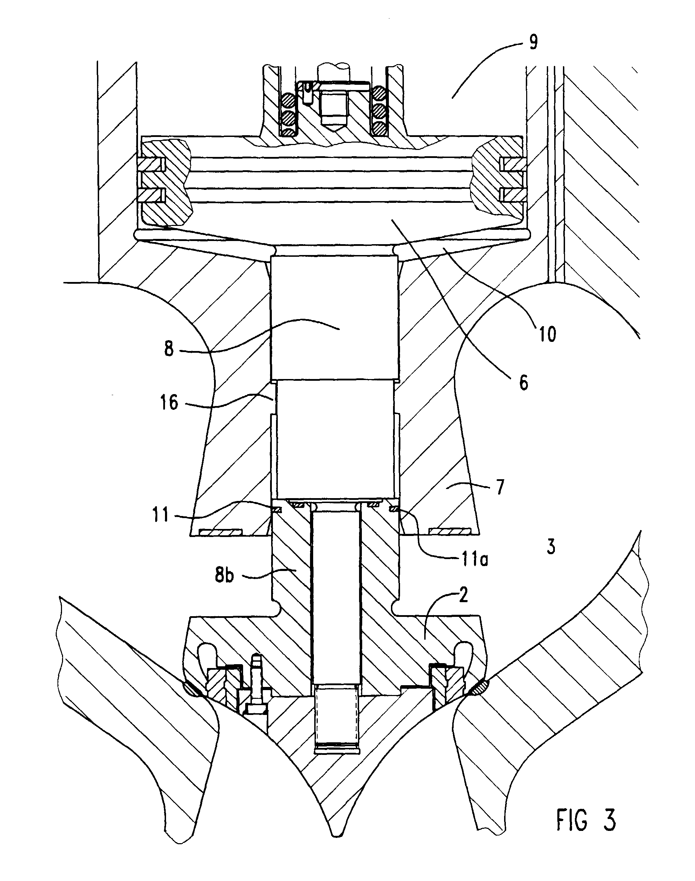

In Fig. 3 ist ein zweites Ausführungsbeispiel der Erfindung gezeigt. Im Gegensatz zum ersten Ausführungsbeispiel ist die Drosselstrecke hier durch einen ersten Drosselspalt 11 zwischen einem Kolbenring lla und der Wand des Dämpfungszylinders 7 gebildet.

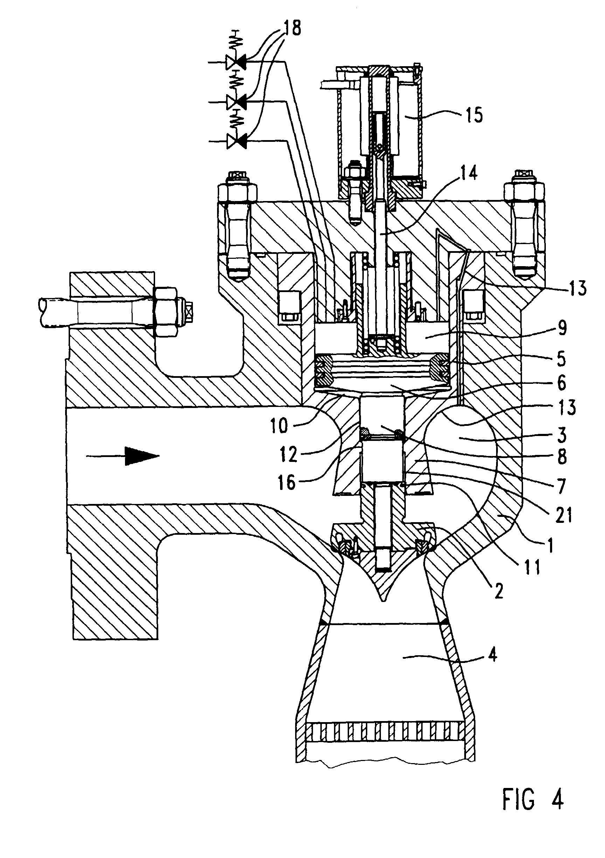

Fig. 4 zeigt ein drittes Ausführungsbeispiel der Erfindung. Hier ist neben dem ersten Drosselspalt 11 ein zweiter Drosselspalt 12 vorgesehen. Der zweite Drosselspalt 12 ist zwischen der Wand des Dämpfungskolbens 8 und der Wand des Dämpfungszylinders 7 gebildet.

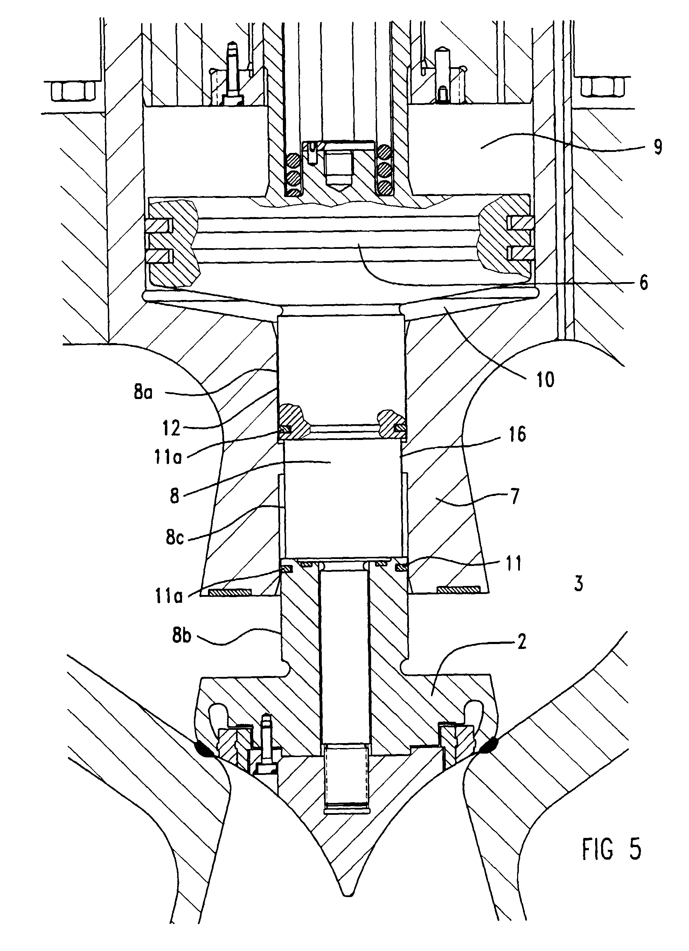

Fig. 5 zeigt vergrößert nochmals den Bereich des Stellkolbens 6, der über den Dämpfungskolben 8 mit dem Ventilkegel 2 in Verbindung steht. Deutlich erkennbar weist der Dämpfungskolben 8 zwei erste Kolbenabschnitte 8a und 8b und einen zweiten taillierten Kolbenabschnitt 8c auf. Zwischen den Kolbenringen 11a und der Wand des Dämpfungszylinders 7 sind erste Drosselspalte 11 und zwischen den Kolbenabschnitten 8a und 8b und der Wand des Dämpfungszylinders 7 sind zweite Drosselspalte 12 erkennbar. Der Vorsprung 16 korrespondiert mit dem taillierten Abschnitt 8c des Dämpfungskolbens 8.

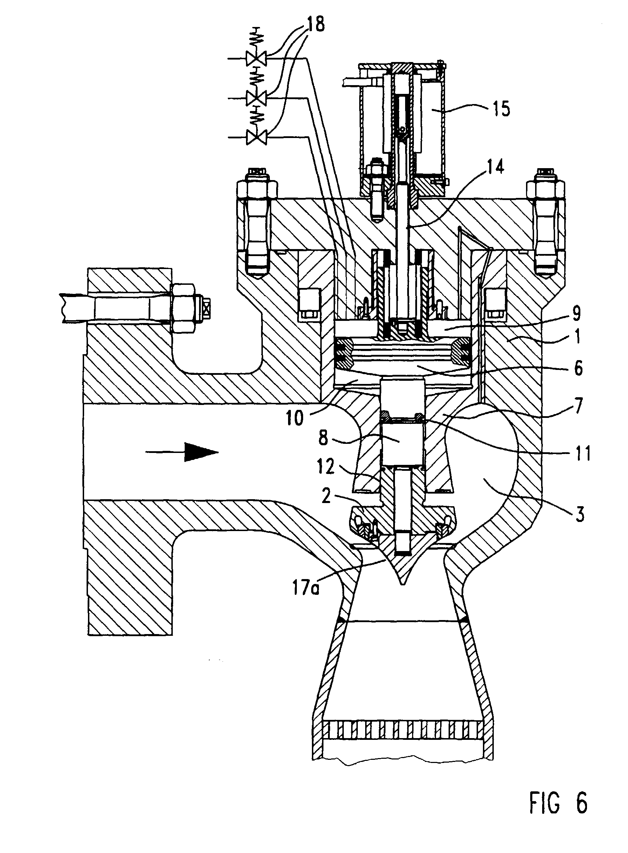

Fig. 6 zeigt einen Vertikalschnitt nach Fig. 4, wobei das Ventil halb geöffnet ist. Erkennbar ist die Unterseite des Ventilkegels 2 vom Ventilsitz abgehoben. Die Steuerventile 18 sind geöffnet.

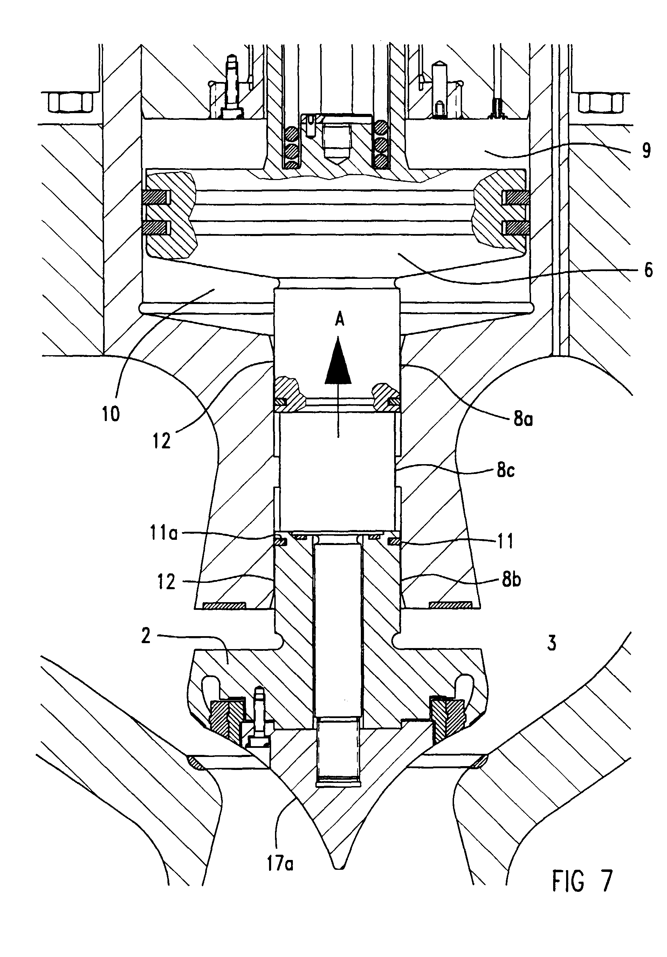

Fig. 7 zeigt vergrößert den Bereich des Stellkolbens 6, des Dämpfungskolbens 8 und des Ventilkegels 2, wobei letzterer sich in halbgeöffneter Stellung befindet. Mit dem Pfeil A ist die Bewegungsrichtung der beweglichen Ventileinbauten beim Öffnen angedeutet. Das Volumen des Steuerraums 9 entspricht in dieser Stellung in etwa dem Volumen des Dämpfungsraums 10.

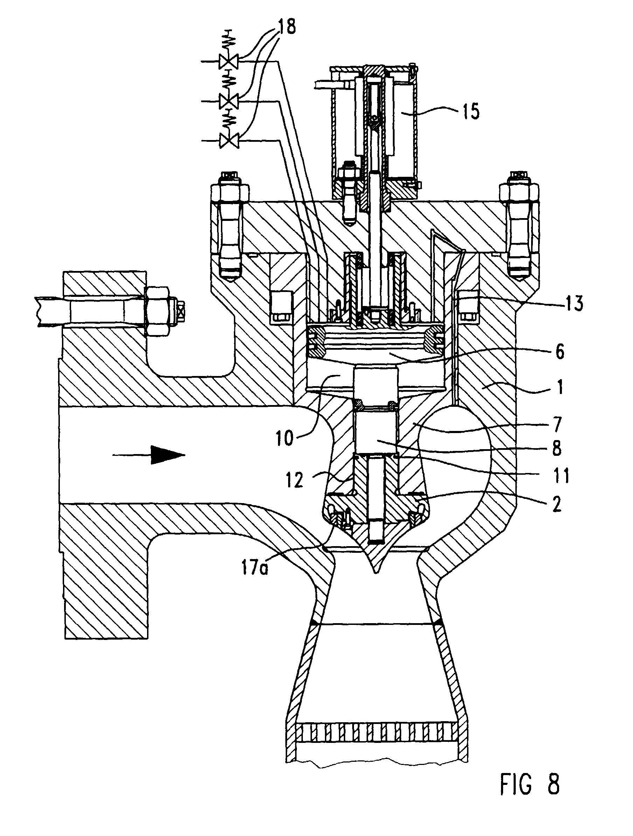

Fig. 8 zeigt einen Vertikalschnitt des Ventils, wobei dieses in voll geöffneter Stellung sich befindet. Das Volumen des Dämpfungsraums 10 ist in dieser Stellung maximal mit Druckmittel gefüllt.

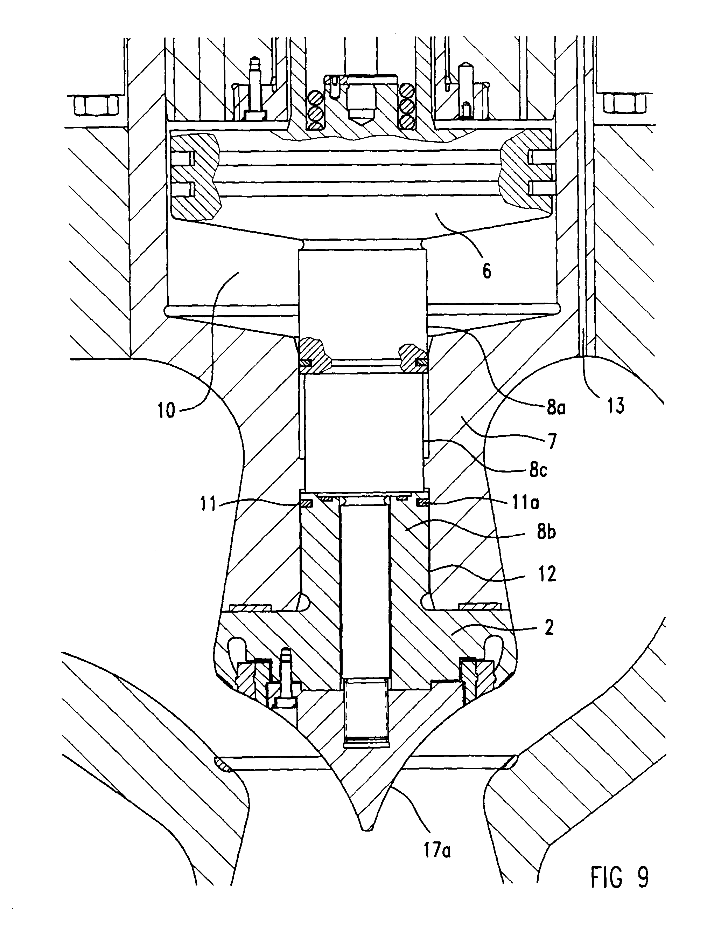

Fig. 9 zeigt den Bereich des Stell- und des Dämpfungskolbens 6 und 8 sowie des Ventilkegels 2 in vergrößerter Ansicht.

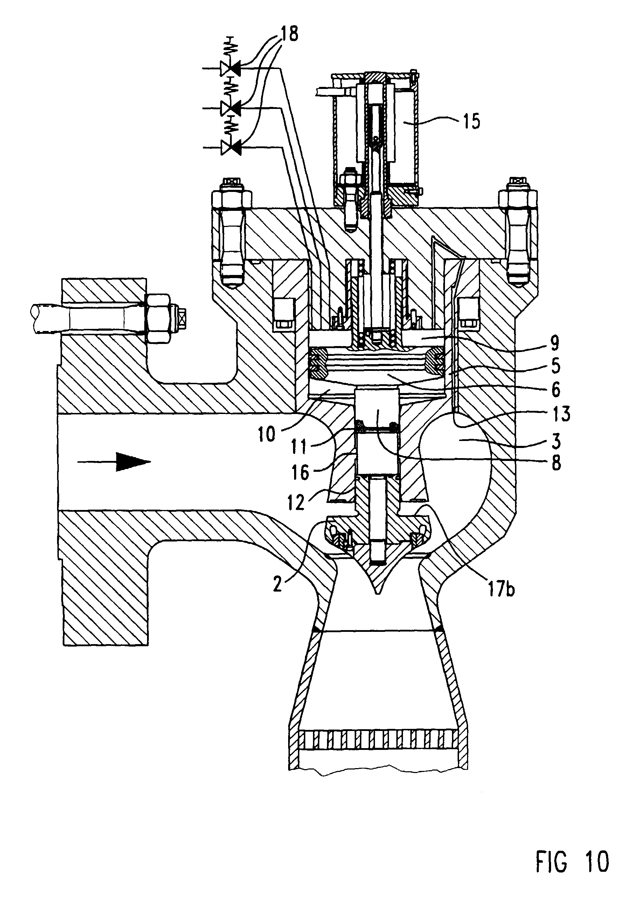

Fig. 10 zeigt einen Vertikalschnitt des Ventils nach Fig. 1 in halb geschlossener Stellung. Erkennbar befinden sich die Steuerventile in geschlossener Stellung, so daß der Steuerraum 9 insbesondere über die Bohrung 13 mit dem druckbeaufschlagten Ventilinnenraum 3 in Verbindung steht.

Die Funktion des erfindungsgemäßen gedämpften Ventils ist folgende.

Der Steuerraum 9 ist - wie in Fig. 1 gezeigt ist - im Normalbetrieb, d.h. bei geschlossener Stellung des gedämpften Ventils über die Bohrung 13 mit demjenigen Druck beaufschlagt, der im Ventilinnenraum 3 herrscht. Der Dämpfungsraum steht über einen mit einem Drosseleinsatz 19 versehen Überströmkanal 20 oder - wie in den Fig. 3 - 10 gezeigt - über einen oder mehrere Drosselspalte 11 bzw. 12 in Verbindung. Zum Öffnen des Ventils werden - wie schematisch in Fig. 6 dargestellt ist - die Steuerventile 18 geöffnet. Der über den Drosseleinsatz 19 bzw. einen oder mehrere Drosselspalte 11, 12 auf die Unterseite des Stellkolbens 6 wirkende Druck schiebt den Stellkolben nach oben. Sobald der Ventilkegel 2 seinen Sitz verlassen hat, greift der Systemdruck auch an der Unterseite 17a des Ventilkegels 2 an und verleiht diesem eine zusätzliche in Öffnungsrichtung des Ventils wirkende Kraftkomponente. Da der Nachschub an Druckmittel in den Dämpfungsraum 10 jedoch gedrosselt ist, erfolgt die Aufwärtsbewegung des Stellkolbens 8 und des damit verbundenen Ventilkegels 2 langsam, d.h. gedämpft.

Zum Schließen des Ventils werden die Steuerventile 18 geschlossen. Über die Bohrung 13 wirkt nunmehr der im Ventilinnenraum 3 herrschende Druck auf die Oberseite des Stellkolbens 8. Die durch den Druck sowie durch die Gewichtskraft des Stellkolbens 6, des Dämpfungskolbens 8 und des damit verbundenen Ventilkegels erzeugte Kraft bewirkt, daß im Dämpfungsraum 10 befindliches Druckmittel über den Drosseleinsatz 19 bzw. den/die Drosselspalt/e 11, 12 in den Ventilinnenraum 3 gedrückt wird. Außerdem greifen an der Oberseite 17b des Ventilkegels 2 die Strömungskräfte des abblasenden Druckmittels an und verleihen dem Ventilkegel 2 eine zusätzliche in Schließrichtung des Ventils wirkende Kraftkomponente. Da die Abströmung des im Dämpfungsraum 10 befindlichen Druckmittels in den Ventilinnenraum 3 jedoch gedrosselt ist, erfolgt die Schließbewegung des Stellkolbens 8 und des damit verbundenen Ventilkegels 2 gedämpft.

## Patentansprüche

1. Ventil mit einem Mittel zum Absperren (2) eines Ventilinnenraums (3), wobei das Mittel zum Absperren (2) mit einem in einem ersten Zylinder (5) geführten Kolben (6) stellbar ist, wobei durch den Kolben (6) im ersten Zylinder (5) ein erster Raum (9) und ein zweiter Raum (10) gebildet ist,
**dadurch gekennzeichnet,** daß der zweite Raum (10) mit dem Ventilinnenraum (3) über eine Drosselstrekke in Verbindung steht, so daß das Mittel zum Absperren (2) sowohl in Schließ- als auch in Öffnungsrichtung gedämpft bewegbar ist, und daß eine Bohrung (13) vorgesehen ist, die den Ventilinnenraum (3) mit dem ersten Raum (9) verbindet.

2. Ventil nach Anspruch 1,
**dadurch gekennzeichnet,** daß die Drosselstrecke durch mindestens einen mit einem Drosseleinsatz (20) versehenen Überströmkanal (19) gebildet ist.

3. Ventil nach Anspruch 1 oder 2,
**dadurch gekennzeichnet,** daß die Drosselstrecke durch mindestens einen Drosselspalt (11, 12) zwischen der Wand eines zweiten Zylinders (7) einerseits und einem in ihm geführten, das Mittel zum Absperren (2) und den Kolben (6) verbindenden Dämpfungskolben (8) andererseits gebildet ist.

4. Ventil nach einem der Ansprüche 1 bis 3,
**dadurch gekennzeichnet,** daß der Kolben (6) und/oder der Dämpfungskolben (8) mindestens eine Nut zur Aufnahme eines Kolbenrings (lla) aufweist bzw. aufweisen.

5. Ventil nach Anspruch 3 oder 4,
**dadurch gekennzeichnet,** daß mindestens zwei Drosselspalte (11, 12) unterschiedlicher Druckmitteldurchlässigkeit vorgesehen sind.

6. Ventil nach einem der Anspruch 3 bis 5,
**dadurch gekennzeichnet,** daß der Dämpfungskolben (8) einen taillierten Abschnitt (8c) und der zweite Zylinder (7) einen dazu korrespondierenden Vorsprung (16) aufweist.

7. Ventil nach einem der Ansprüche 3 bis 6,
**dadurch gekennzeichnet,** daß der/die Drosselspalt/e (11, 12), der taillierte Abschnitt (8c) und der Vorsprung (16) umlaufend ausgebildet sind.

8. Ventil nach einem der Ansprüche 1 bis 7,
**dadurch gekennzeichnet,** daß eine Einrichtung zum Anzeigen des Hubs (15) des ersten Kolbens (6) vorgesehen ist.

9. Ventil nach einem der Ansprüche 1 bis 8,
**daduch gekennzeichnet,** daß mindestens ein Absperrelement (18) vorgesehen ist, mit dem ein in dem ersten Raum (9) herrschender Druck entlastbar ist.

## Claims

1. Valve having a means for shutting off (2) a valve interior (3), it being possible for the means for shutting-off (2) to be set by means of a piston (6) guided in a first cylinder (5), a first space (9) and a second space (10) being formed by the piston (6) in the first cylinder (5), characterized in that the second space (10) communicates with the valve interior (3) via a throttle route so that the means for shutting-off (2) can be moved in a damped manner both in the closing and in the opening direction, and in that a bore (13) is provided, which connects the valve interior (3) to the first space (9).

2. Valve according to Claim 1, characterized in that the throttle route is formed by at least one overflow duct (20) provided with a throttle insert (19).

3. Valve according to Claim 1 or 2, characterized in that the throttle route is formed by at least one throttle gap (11, 12) between the wall of a second cylinder (7), on the one hand, and a damping piston (8) which is guided in the said cylinder and connects the means for shutting-off (2) and the piston (6), on the other hand.

4. Valve according to one of Claims 1 to 3, characterized in that the piston (6) and/or the damping piston (8) has or have at least one groove to receive a piston ring (11a).

5. Valve according to Claim 3 or 4, characterized in that at least two throttle gaps (11, 12) which allow different amounts of pressure medium to pass through are provided.

6. Valve according to one of Claims 3 to 5, characterized in that the damping piston (8) has an indented section (8c), and the second cylinder (7) has a projection (16) corresponding thereto.

7. Valve according to one of Claims 3 to 6, characterized in that the throttle gap or gaps (11, 12), the indented section (8c) and the projection (16) are of circumferential design.

8. Valve according to one of Claims 1 to 7, characterized in that a device for indicating the stroke (15) of the first piston (6) is provided.

9. Valve according to one of Claims 1 to 8, characterized in that at least one shut-off element (18) is provided, with which a pressure prevailing in the first space (9) can be relieved.

## Revendications

1. Soupape comprenant un moyen de fermeture (2) d'un espace intérieur (3) de soupape, le moyen de fermeture (2) étant réglable par un piston (6) guidé dans un premier cylindre (5), ledit piston (6) dans le premier cylindre (5) formant un premier espace (9) et un deuxième espace (10), caractérisée en ce que le deuxième espace (10) communique avec l'espace intérieur (3) par une voie d'étranglement, de manière à permettre un mouvement amorti du moyen de fermeture (2) aussi bien en sens d'ouverture que de fermeture, et en ce qu'un alésage (13) est prévu, qui relie l'espace intérieur (3) au premier espace (9).

2. Soupape selon la revendication 1, caractérisée en ce que la voie d'étranglement est formée par au moins un canal de trop-plein (19) muni d'un insert d'étranglement (20).

3. Soupape selon la revendication 1 ou 2, caractérisée en ce que la voie d'étranglement est formée par au moins une fente d'étranglement (11, 12) entre, d'une part, la paroi d'un deuxième cylindre (7) et, d'autre part, un piston amortisseur (8) guidé dans celui-ci, qui relie le moyen d'isolement (2) au piston (6).

4. Soupape selon l'une des revendications 1 à 3, caractérisée en ce que le piston (6) et/ou le piston amortisseur (8) présente, resp. présentent, au moins une rainure pour la réception d'un segment de piston (11a).

5. Soupape selon la revendication 3 ou 4, caractérisée en ce qu'au moins deux fentes d'étranglement (11, 12) de perméabilité différente aux moyens de pression sont prévues.

6. Soupape selon l'une des revendications 3 à 5, caractérisée en ce que le piston amortisseur (8) comporte une section rétrécie (8c) et le deuxième cylindre (7) une saillie (16) correspondante.

7. Soupape selon l'une des revendications 3 à 6, caractérisée en ce que la/les fente(s) d'étranglement (11, 12), la section rétrécie (8c) et la saillie sont réalisées de façon continue.

8. Soupape selon l'une des revendications 1 à 7, caractérisée en ce qu'un dispositif indicateur de course (15) du premier piston (6) est prévu.

9. Soupape selon l'une des revendications 1 à 8, caractérisée en ce qu'au moins un élément d'arrêt (18) est prévu, permettant de réduire une pression régnant dans le premier espace (9).
